# EUROPEAN PATENT APPLICATION

(11) **EP 1 790 925 A2**
(43) Date of publication of application: **30.05.2007**
(21) Application number: 06008343.3
(22) Date of filing: 21.04.2006
(51) Int. Cl.: F25D 17/06, F25D 17/04, F25D 29/00

(54) **Refrigerator and control method thereof**

(30) Priority: 23.11.2005 KR 20050112477
(71) Applicant: Samsung Electronics Co., Ltd., Suwon-si, Gyeonggi-Do (KR)
(72) Inventor: Ahn, Ji Hun No.204, 1027-11, Suwon-Si Gyeonggi-Do (KR); Lee, Jae Seung No.210-102, Hwaseoong-Si Gyeonggi-Do (KR); Kim, Yoon Young No.312-1101, Suwon-Si Gyeonggi-Do (KR); Lim, Chang Hak, Taean-Eub, Hwasung-Si, Gyeonggi-Do (KR)
(74) Representative: Grünecker, Kinkeldey, Stockmair & Schwanhäusser Anwaltssozietät

(57) **Abstract**

A refrigerator and a control method thereof in which a plurality of storage compartments are cooled based on their cooling priorities, which are determined in accordance with a set temperature or thermal load of each storage compartment, whereby the storage compartments can maintain high humidity. The refrigerator for keeping the average humidity of the storage compartments high includes a compressor (10), the plurality of storage compartments, a plurality of evaporators (16,18) and fans (15,17) corresponding to the plurality of storage compartments, respectively, temperature sensors (32,34) for detecting a temperature of each of the plurality of storage compartments, and a controller (30) adapted to compare the temperature, detected by the respective temperature sensors, with a set temperature of each of the storage compartments so as to determine whether or not it is necessary to cool each of the storage compartments, and, when it is necessary to cool the plurality of storage compartments, to assign cooling priories to the storage compartments to be cooled from lowest to highest set temperatures, to control the fans of the storage compartments to be cooled in accordance with the assigned cooling priorities.

## Description

### BACKGROUND OF THE INVENTION

### 1. Field of the Invention

The present invention relates to a refrigerator and a control method thereof, and, more particularly, to a refrigerator and a control method thereof, wherein a plurality of storage compartments are cooled based on their cooling priorities, which are determined in accordance with a set temperature or thermal load of each storage compartment, whereby the storage compartments can maintain high humidity.

### 2. Description of the Related Art

Generally, a refrigerator is a home appliance having a plurality of storage compartments, each storage compartment being adapted to maintain a lower temperature than the outside via the circulation of refrigerant. The refrigerator commonly has a freezing compartment which maintains a low temperature of approximately minus 20 degrees, and a refrigerating compartment which maintains a temperature of approximately 3 degrees.

Such a refrigerator includes a compressor, condenser, expansion valve, and evaporator. If refrigerant is compressed in the compressor, the compressed refrigerant is condensed into a liquid-phase refrigerant in the condenser. Subsequently, the liquid-phase refrigerant is moved into the expansion valve to be expanded into a low-temperature gaseous refrigerant therein. As the low-temperature gaseous refrigerant is transferred to the evaporator, cold air is produced in accordance with the operation of the evaporator. Commonly, the evaporator is provided with a fan to facilitate the smooth circulation of the cold air between the evaporator and the interior of the storage compartments.

It is normal that the freezing and refrigerating compartments are provided with temperature sensors for detecting present temperatures. By comparing the detected present temperatures with preset target temperatures of the freezing and refrigerating compartments, it is able to determine whether or not it is necessary to cool the respective compartments. Commonly, the freezing compartment has a large temperature difference with the outside due to a low target temperature thereof, and also has less heat insulation than the refrigerating compartment due to structural limits thereof. For these reasons, the freezing compartment requires a longer cooling time than the refrigerating compartment.

When it is necessary to cool both the freezing and refrigerating compartments, in accordance with a solution of the prior art, the freezing and refrigerating compartments are adapted to be simultaneously cooled. In general, moisture inside the refrigerating compartment tends to be defrosted on the evaporator, etc. during a cooling operation, and therefore, the refrigerating compartment suffers from a reduction in humidity. In other words, a refrigerating compartment cooling period results in a corresponding dehumidifying period. Also, the refrigerating compartment has a small temperature difference between a preset target temperature thereof and the temperature of the outside, and therefore, the cooling of the refrigerating compartment is completed faster than the freezing compartment. If the refrigerating compartment fulfills a target temperature condition thereof, the cooling of the refrigerating compartment stops, and only the freezing compartment continues to be cooled. The humidity of the refrigerating compartment is rapidly lowered when the refrigerating compartment is cooled, and is kept low prior to passing through a defrosting period. The humidity of the refrigerating compartment can be restored via a separate defrosting operation, etc. after completing the cooling of the freezing compartment. In conclusion, the humidity of the refrigerating compartment is continuously kept low for a long time until the cooling of the refrigerating compartment is completed and subsequently, the cooling of the freezing compartment is completed, resulting in a decrease in average humidity.

The depressed average humidity may cause the surface-drying of food reserves, and therefore, may cause deterioration in freshness of the food reserves.

To solve the above problems and maintain high humidity, there is a need for a separate defrosting heater, etc. or to frequently perform defrosting operations. This results in an increase in the consumption of energy.

### SUMMARY OF THE INVENTION

The present invention has been made in order to solve the above problems. It is an aspect of the invention to provide a refrigerator and a control method thereof, wherein a plurality of storage compartments are cooled based on their cooling priorities, which are determined in accordance with a set temperature or thermal load of each storage compartment, whereby the respective storage compartments can maintain high average humidity.

Consistent with one aspect, an exemplary embodiment of the present invention provides a refrigerator including: a compressor; a plurality of storage compartments; a plurality of evaporators and fans corresponding to the plurality of storage compartments, respectively; temperature sensors for detecting a temperature of each of the plurality of storage compartments; and a controller adapted to compare the temperature, detected by the respective temperature sensors, with a set temperature of each of the storage compartments so as to determine whether or not it is necessary to cool each of the storage compartments, and, when it is necessary to cool the plurality of storage compartments, to assign cooling priories to the storage compartments to be cooled from lowest to highest set temperatures, to control the fans of the storage compartments to be cooled in accordance with the assigned cooling priorities.

The plurality of storage compartments may include a refrigerating compartment and a freezing compartment, refrigerant flow paths being arranged in parallel to supply refrigerant into the respective evaporators for the refrigerating and freezing compartments, a 3-way valve being provided to regulate the supply of refrigerant into the respective refrigerant flow paths.

The controller may stop the compressor after completing the cooling of both the refrigerating and freezing compartments, and subsequently, operates only the fan for the refrigerating compartment, to perform a natural defrosting operation.

The refrigerating compartment may further include a separate storage compartment maintaining a high humidity, the controller operating to cool the separate storage compartment last.

The controller may stop the operation of the compressor when the storage compartment, which is assigned to be cooled last, is completely cooled.

Consistent with another aspect, an exemplary embodiment of the present invention provides a refrigerator including: a compressor; a plurality of storage compartments; a plurality of evaporators and fans corresponding to the plurality of storage compartments, respectively; temperature sensors for detecting a temperature of each of the plurality of storage compartments; and a controller adapted to compare the temperature, detected by the respective temperature sensors, with a set temperature of each of the storage compartments so as to determine whether or not it is necessary to cool each of the storage compartments, and, when it is necessary to cool the plurality of storage compartments, to assign cooling priories to the storage compartments to be cooled from highest to lowest thermal loads, to control the fans of the storage compartments to be cooled in accordance with the assigned cooling priorities.

The controller may calculate the thermal loads of the storage compartments to be cooled by use of a difference between the temperature, detected by the temperature sensor of each storage compartment, and the set temperature of the storage compartment.

The plurality of storage compartments may include a refrigerating compartment and a freezing compartment, refrigerant flow paths being arranged in parallel to supply refrigerant into the respective evaporators for the refrigerating and freezing compartments, a 3-way valve being provided to regulate the supply of refrigerant into the respective refrigerant flow paths.

The controller may stop the compressor after completing the cooling of both the refrigerating and freezing compartments, and subsequently, may operate only the fan for the refrigerating compartment, to perform a natural defrosting operation.

Consistent with yet another aspect, an exemplary embodiment of the present invention provides a method for controlling a refrigerator including a plurality of storage compartments, evaporators corresponding to the respective storage compartments, fans corresponding to the respective evaporators, and temperature sensors for detecting a temperature of each of the storage compartments, the method including: detecting the temperature of each of the storage compartments by use of the temperature sensors; determining whether or not it is necessary to cool each of the storage compartments by comparing the detected temperature with a set temperature of each of the storage compartments; assigning cooling priorities of the plurality of storage compartments, which are determined to be cooled; and cooling each of the storage compartments by operating the fans of the respective evaporators in accordance with the cooling priorities.

The cooling priorities may assigned to the respective storage compartments to be cooled from lowest to highest set temperatures.

The method may further include: calculating a thermal load of each of the storage compartments to be cooled by use of a difference between the detected temperature and the set temperature of each of the storage compartments, the cooling priorities being assigned to the respective storage compartments from highest to lowest thermal loads.

The method may further include: performing a natural defrosting operation for operating the fan of the evaporator of the last storage compartment of the cooling priorities after the last storage compartment is completely cooled.

Additional aspects and/or advantages of the invention will be set forth in part in the description which follows and, in part, will be apparent from the description, or may be learned by practice of the invention.

### BRIEF DESCRIPTION OF THE DRAWINGS

These and/or other aspects and advantages of the exemplary embodiments of the invention will become apparent and more readily appreciated from the following description of the embodiments, taken in conjunction with the accompanying drawings, of which:
FIG. 1 is a block diagram showing a first example of a refrigerant circulation circuit of a refrigerator having two evaporators;
FIG 2 is a block diagram showing a second example of the refrigerant circulation circuit of the refrigerator having two evaporators;
FIG. 3 is a schematic control block diagram showing an exemplary embodiment of the refrigerator consistent with the present invention;
FIG. 4 is a time chart showing an exemplary embodiment of a refrigerator control method consistent with the present invention;
FIG. 5 is a graph showing the humidity of a refrigerating compartment in accordance with a refrigerant cycle of the exemplary embodiment of the refrigerator consistent with the present invention;
FIG 6 is a graph comparing the average humidity in accordance with a control method of the prior art with the average humidity in accordance with the control method consistent with the exemplary embodiment of the present invention; and
FIG 7 is a control flow chart showing the exemplary embodiment of the refrigerator control method consistent with the present invention.

### DETAILED DESCRIPTION OF THE PREFERRED EMBODIMENTS

Reference will now be made in detail to exemplary embodiments of the present invention, examples of which are illustrated in the accompanying drawings, wherein like reference numerals refer to like elements throughout. The embodiments are described below to explain the present invention by referring to the figures.

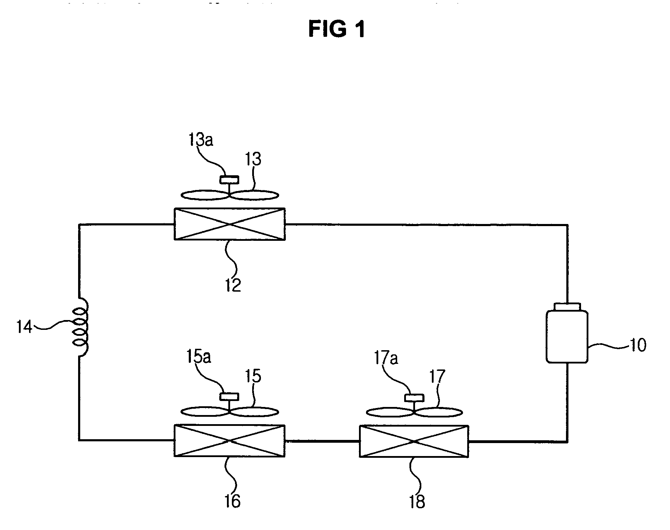

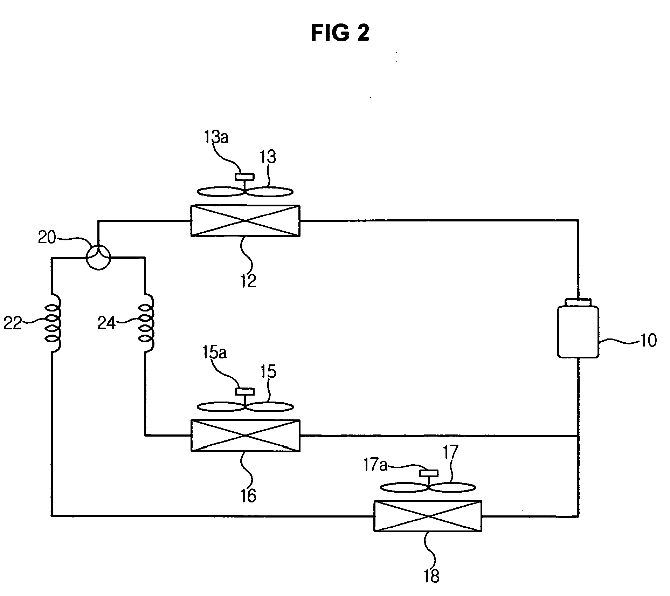

FIGS. 1 and 2 are block diagrams showing first and second examples of a refrigerant circulation circuit of a refrigerator having two evaporators. As shown in FIGS. 1 and 2, the refrigerator includes a compressor 10 to compress refrigerant, and a condenser 12 to condense the compressed high-temperature and high-pressure refrigerant into liquid-phase refrigerant. The condensed refrigerant is converted into low-temperature gaseous refrigerant after passing through a capillary tube 14. Then, the converted low-temperature gaseous refrigerant passes through an evaporator 16 for a refrigerating compartment and an evaporator 18 for a freezing compartment, to thereby be introduced into the compressor 10. Here, an expansion valve having a variable degree of opening may substitute for the capillary tube 14.

The condenser 12, the refrigerating compartment evaporator 16, and the freezing compartment evaporator 18 are provided with fans 13, 15, and 17 and fan motors 13a, 15a, and 17a, respectively, to produce the flow of air for accomplishing smooth heat exchange. In FIG. 2, two refrigerant flow paths are arranged in parallel to transfer low-temperature gaseous refrigerant into both the refrigerating compartment evaporator 16 and the freezing compartment evaporator 18, respectively. The refrigerant flow paths are provided with a capillary tube 24 for a refrigerating compartment and a capillary tube 22 for a freezing compartment, respectively. A 3-way valve 20 is provided to regulate the amount of refrigerant to be transferred into the refrigerant flow paths. The 3-way valve 20 is controlled to selectively or simultaneously transfer the refrigerant into both the refrigerating compartment evaporator 16 and the freezing compartment evaporator 18.

If the evaporators 16 and 18 produce cold air by use of the refrigerant transferred thereto as stated above, the produced cold air is blown into refrigerating and freezing compartments in accordance with operations of the fan motors 15a and 17a and the fans 15 and 17, which are provided to correspond to the respective evaporators 16 and 18. The operations of the fan motors 15a and 17a are controlled based on detected temperatures of the refrigerating and freezing compartments. The refrigerator of FIG. 2 has a function of regulating temperatures of the refrigerating and freezing compartments by controlling the operations of the fans 15 and 17 while regulating the amount of refrigerant to be transferred into the respective refrigerant flow paths.

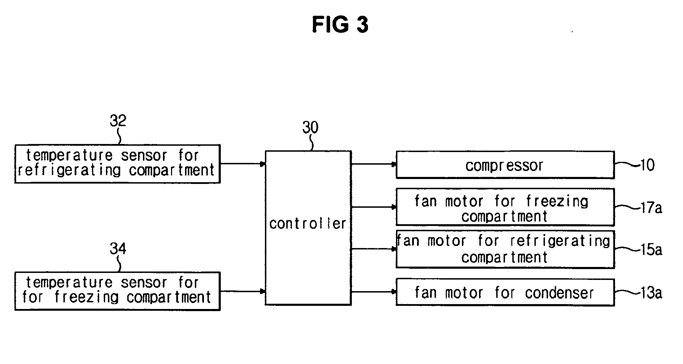

FIG. 3 is a schematic control block diagram showing an exemplary embodiment of the refrigerator consistent with the present invention. In the present invention, present temperatures of the refrigerating compartment and the freezing compartment are detected by temperature sensors 32 and 34, which are provided in the refrigerating compartment and the freezing compartment, respectively. The detected present temperatures are inputted to a controller 30. Thereby, the controller 30 compares the detected present temperatures and preset temperatures of the refrigerating compartment and the freezing compartment, to determine whether or not it is necessary to cool the refrigerating compartment and the freezing compartment. Since the preset temperature of the freezing compartment is considerably lower than the temperature of the outside, whether or not the compressor 10 is operated for cooling is generally determined based on a comparative result between the detected present temperature and the preset temperature of the freezing compartment. The reason why the operation of the compressor 10 is based on the comparative result between the detected present temperature and the preset temperature is that the lower the preset temperature, the larger the cooling load, and the preset temperature occupies a larger part of a refrigeration cycle in view of the necessity and frequency of cooling operations and time required to perform the cooling operations. In the present invention, when it is determined, from the comparative result between the detected temperature and the preset temperature of each compartment, that it is necessary to cool both the refrigerating and freezing compartments, the freezing compartment, having the lower preset temperature than the refrigerating compartment, begins to be cooled first. Alternatively, by calculating a temperature difference between the preset temperature and the detected temperature of each compartment, and calculating a required thermal load based on the calculated temperature difference, the freezing compartment, which has a larger thermal load requiring a relatively long cooling time, is first cooled. In an example, the thermal load may be calculated based on the size of a space to be cooled as well as the temperature difference between the preset target temperature and the present temperature. The thermal load can be more accurately calculated when additionally considering environmental conditions, for example, the temperature of the outside, and the insulation degree of a space to be cooled. Accordingly, after completing the cooling of the freezing compartment requiring a longer cooling time, the refrigerating compartment is cooled, and subsequently, a natural defrosting operation is performed. As a result, the humidity of the refrigerating compartment is kept low only for a reduced time, allowing the refrigerating compartment to maintain high average humidity.

Although the present embodiment employs only two storage compartments, a refrigerating compartment and a freezing compartment, it should be understood that separate storage compartments suitable for the preservation of freshness may be added, and each of the plurality of storage compartments may be configured to have a corresponding evaporator, fan motor, and fan for accomplishing an independent temperature regulation function. Also, refrigerant flow paths may be provided to transfer refrigerant into the respective evaporators, and a valve may be provided to regulate the amount of refrigerant to be transferred to the refrigerant flow paths. The plurality of storage compartments are provided with temperature sensors, respectively, such that whether or not it is necessary to cool the storage compartments is determined based on a comparative result between the preset temperature and the detected temperature of each storage compartment. If it is determined from the comparative result that it is necessary to cool the plurality of storage compartments, cooling priorities are assigned to the respective storage compartments from lowest to highest preset temperatures, such that the plurality of storage compartments are successively cooled. The reason why the storage compartments are successive cooled based on their preset temperatures is that the lower the preset temperature of the storage compartment, the larger the temperature difference between the storage compartment and the outside, and therefore, the storage compartment exhibits a greater cooling load, and consequently, a longer cooling time. Accordingly, by cooling the storage compartment requiring a shorter cooling time later, the storage compartments have only minimal dehumidifying period, and thus, can maintain high average humidity. The reason why the storage compartment requiring a shorter cooling time is cooled later is that the storage compartment has a less temperature difference between the preset temperature thereof and the temperature of the outside as compared to another storage compartment having a lower preset temperature, and thus has a greater necessity for maintaining high humidity. Alternatively, when the thermal load of each storage compartment is calculated by use of a difference between the detected present temperature and the preset temperature of the storage compartment, cooling priorities are assigned to the respective storage compartments from highest to lowest thermal loads. The smaller the thermal load, the shorter the cooling time of the storage compartment, and therefore, the same effect as the above description can be obtained.

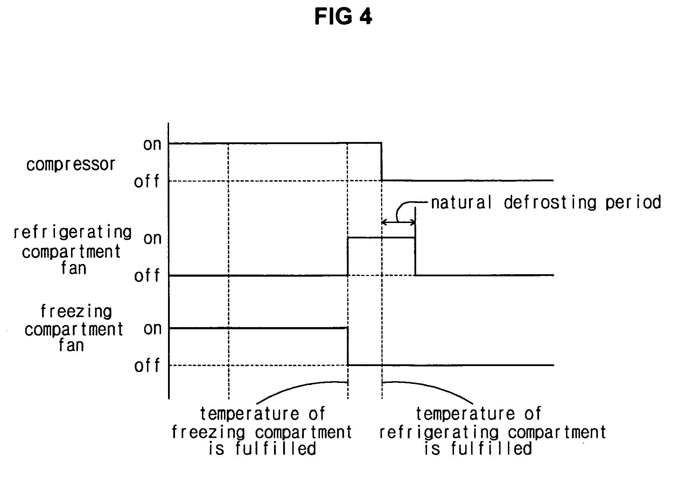

FIG. 4 is a time chart showing an exemplary embodiment of a refrigerator control method consistent with the present invention. As mentioned above, since the preset temperature of the freezing compartment is lower than that of the refrigerating compartment, and the freezing compartment has a limit in the reinforcement of insulation due to the structure thereof, generally, the freezing compartment has a greater cooling necessity. Accordingly, the controller 30 may perform a control operation to operate the compressor 10 when it is necessary to cool the freezing compartment. Also, in the embodiment of the present invention, since the refrigerating compartment is adapted to be cooled later, whether or not the operation of the compressor 10 stops is determined in accordance with the temperature condition of the refrigerating compartment. This is as shown in FIG. 4.

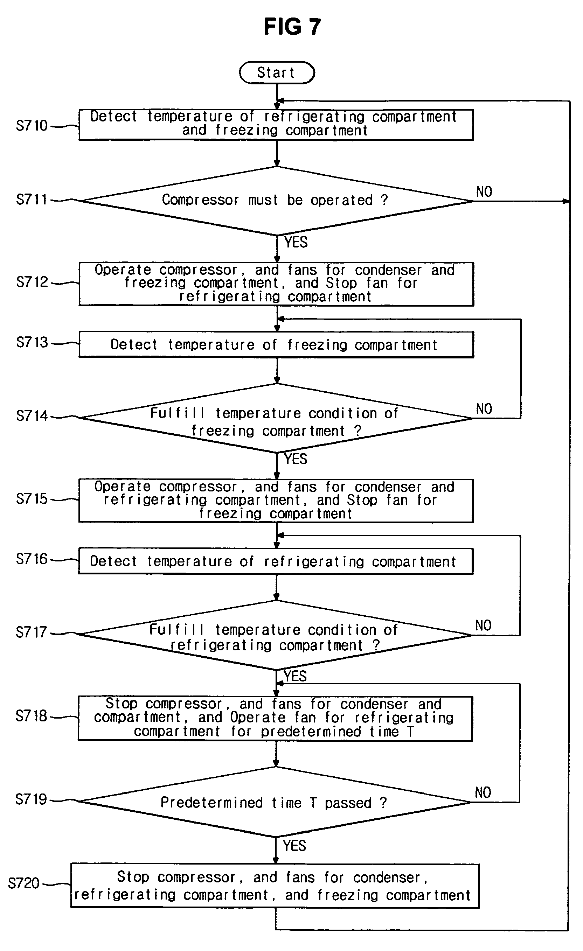

FIG. 7 is a control flow chart showing the exemplary embodiment of the refrigerator control method consistent with the present invention. Now, the control sequence of the refrigerator control method will be explained with reference to FIGS. 4 and 7. First, present temperatures of the refrigerating and freezing compartments are detected to determine whether or not it is necessary to cool the refrigerating and freezing compartments (S710 and S711). When it is necessary to cool both the refrigerating and freezing compartments, the compressor 10, the fan motor 13a for the condenser, and the fan motor 17a for the freezing compartment are operated to rotate the fan 13 for the condenser and the fan 17 for the freezing compartment, to cool the freezing compartment (S712). The temperature of the freezing compartment is checked by use of the temperature sensor 34 for the freezing compartment during the cooling of the freezing compartment, to check whether or not the freezing compartment has reached the preset temperature thereof (S713 and S714). If it is determined as a result of checking that the freezing compartment fulfills a desired temperature condition, the operation of the fan 17 for the freezing compartment stops, and the fan motor 15a for the refrigerating compartment is operated to rotate the fan 15 for the refrigerating compartment, to begin the cooling of the refrigerating compartment (S715). The temperature of the refrigerating compartment is detected by use of the temperature sensor 32 for the refrigerating compartment during the cooling of the refrigerating compartment, and the detected temperature is compared with the preset temperature of the refrigerating compartment, to determine whether or not the refrigerating compartment fulfills a desired temperature condition (S716 and S717). If it is determined that the refrigerating compartment fulfills the desired temperature condition, the operations of the fan 13 for the condenser and the compressor 10 stop and the fan 15 for the refrigerating compartment is rotated for a predetermined time T (S718). The reason why the fan 15 is rotated for the predetermined time T is that, after stopping the operation of the compressor 10, cold air obtained from low-temperature refrigerant in the evaporator 16 for the refrigerating compartment is used to remove frost from the evaporator, accomplishing a natural defrosting effect. The natural defrosting is based on a principle that the preset temperature of the refrigerating compartment is considerably lower than a room temperature, i.e. the refrigerating compartment has only a small amount of saturated steam, and therefore, the relative humidity of the refrigerating compartment rapidly increases even by only a slight amount of moisture. If it is checked that the predetermined time T passed, the rotation of the fan 15 for the refrigerating compartment stops (S719 and S720). The natural defrosting may be performed for the predetermined time T as in the present embodiment, or may be performed based on the temperature of the evaporator which is detected by a temperature sensor provided in the evaporator. After completion of the natural defrosting, the temperatures of the refrigerating and freezing compartments are again checked, to determine whether or not the compressor 10 is operated.

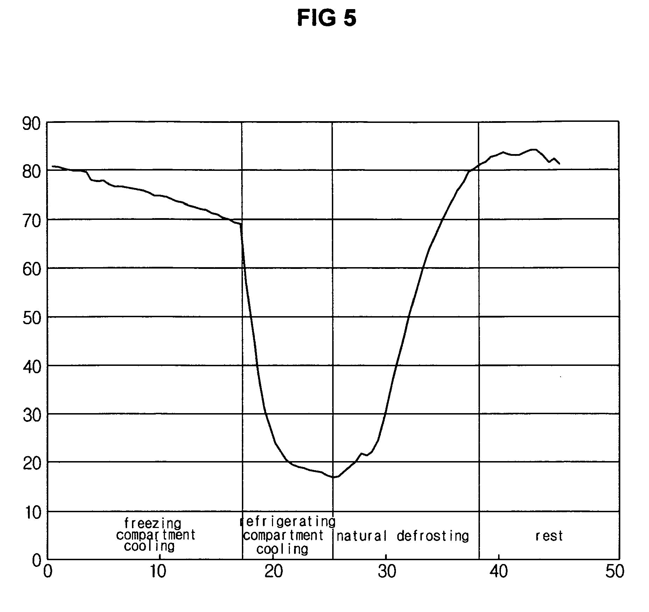

FIG. 5 is a graph showing the humidity of the refrigerating compartment obtained by a refrigerant cycle of the exemplary embodiment of the refrigerator consistent with the present invention. It can be understood from FIG. 5 that the freezing compartment has a large cooling load, and therefore, occupies a large part of a refrigeration cycle. Accordingly, when the freezing compartment is first cooled and subsequently, the refrigerating compartment is cooled, in accordance with cooling priorities determined using set temperature or thermal load, a dehumidifying period can be shortened. As a result, the refrigerating compartment can maintain a high average humidity. Similarly, in the case of a refrigerator having three or more storage compartments, the storage compartments can achieve a higher average humidity as compared to the prior art when the storage compartments are sequentially cooled in accordance with the cooling priorities determined using the above criteria.

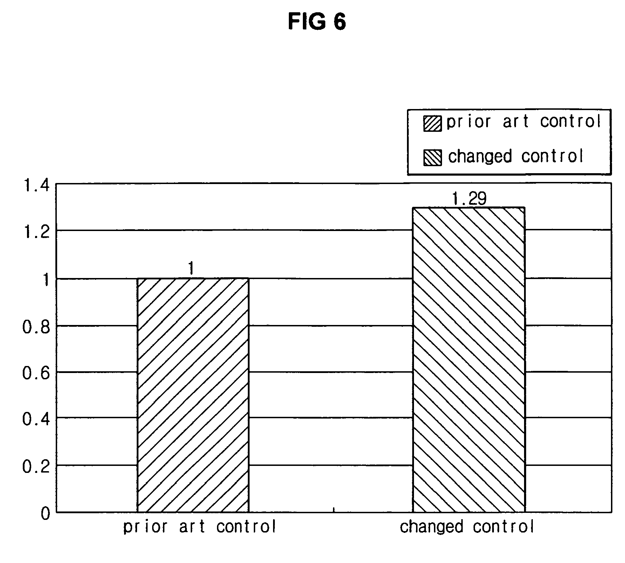

FIG. 6 is a graph comparing the average humidity in accordance with a control method of the prior art with the average humidity in accordance with the control method consistent with the exemplary embodiment of the present invention. As shown in FIG. 6, the present invention achieves an increase in the average humidity of the refrigerating compartment by approximately 30% as compared to the prior art. Thereby, the respective storage compartments can be cooled while maintaining a high humidity, without requiring separate defrosting operations or additional equipment, for example, a defrosting heater.

As apparent from the above description, the present invention has the effect of keeping the average humidity of a plurality of storage compartments high by cooling the storage compartments in accordance with cooling priorities, which are determined by use of a preset temperature or thermal load of each storage compartment.

Furthermore, the humidity of the respective storage compartments can be kept high via a simple control without requiring separate equipment.

Although embodiments of the present invention have been shown and described, it would be appreciated by those skilled in the art that changes may be made in this embodiment without departing from the principles and spirit of the invention, the scope of which is defined in the claims and their equivalents.

## Claims

1. A refrigerator comprising:
a compressor;
a plurality of storage compartments;
a plurality of evaporators and fans corresponding to the plurality of storage compartments, respectively;
temperature sensors for detecting a temperature of each of the plurality of storage compartments; and
a controller adapted to compare the temperature, detected by the respective temperature sensors, with a set temperature of each of the storage compartments so as to determine whether or not it is necessary to cool each of the storage compartments, and, when it is necessary to cool the plurality of storage compartments, to assign cooling priories to the storage compartments to be cooled from lowest to highest set temperatures, to control the fans of the storage compartments to be cooled in accordance with the assigned cooling priorities.

2. The refrigerator according to claim 1, wherein the plurality of storage compartments include a refrigerating compartment and a freezing compartment, refrigerant flow paths being arranged in parallel to supply refrigerant into the respective evaporators for the refrigerating and freezing compartments, a 3-way valve being provided to regulate the supply of refrigerant into the respective refrigerant flow paths.

3. The refrigerator according to claim 2, wherein the controller stops the compressor after completing the cooling of both the refrigerating and freezing compartments, and subsequently, operates only the fan for the refrigerating compartment, to perform a natural defrosting operation.

4. The refrigerator according to claim 2, wherein the refrigerating compartment further includes a separate storage compartment maintaining a high humidity, the controller operating to cool the separate storage compartment last.

5. The refrigerator according to claim 1, wherein the controller stops the operation of the compressor when the storage compartment, which is assigned to be cooled last, is completely cooled.

6. A refrigerator comprising:
a compressor;
a plurality of storage compartments;
a plurality of evaporators and fans corresponding to the plurality of storage compartments, respectively;
temperature sensors for detecting a temperature of each of the plurality of storage compartments; and
a controller adapted to compare the temperature, detected by the respective temperature sensors, with a set temperature of each of the storage compartments so as to determine whether or not it is necessary to cool each of the storage compartments, and, when it is necessary to cool the plurality of storage compartments, to assign cooling priories to the storage compartments to be cooled from highest to lowest thermal loads, to control the fans of the storage compartments to be cooled in accordance with the assigned cooling priorities.

7. The refrigerator according to claim 6, wherein the controller calculates the thermal loads of the storage compartments to be cooled by use of a difference between the temperature, detected by the temperature sensor of each storage compartment, and the set temperature of the storage compartment.

8. The refrigerator according to claim 6, wherein the plurality of storage compartments include a refrigerating compartment and a freezing compartment, refrigerant flow paths being arranged in parallel to supply refrigerant into the respective evaporators for the refrigerating and freezing compartments, a 3-way valve being provided to regulate the supply of refrigerant into the respective refrigerant flow paths.

9. The refrigerator according to claim 8, wherein the controller stops the compressor after completing the cooling of both the refrigerating and freezing compartments, and subsequently, operates only the fan for the refrigerating compartment, to perform a natural defrosting operation.

10. A method for controlling a refrigerator comprising a plurality of storage compartments, evaporators corresponding to the respective storage compartments, fans corresponding to the respective evaporators, and temperature sensors for detecting a temperature of each of the storage compartments, the method comprising:
detecting the temperature of each of the storage compartments by use of the temperature sensors;
determining whether or not it is necessary to cool each of the storage compartments by comparing the detected temperature with a set temperature of each of the storage compartments;
assigning cooling priorities of the plurality of storage compartments, which are determined to be cooled; and
cooling each of the storage compartments by operating the fans of the respective evaporators in accordance with the cooling priorities.

11. The method according to claim 10, wherein the cooling priorities are assigned to the respective storage compartments to be cooled from lowest to highest set temperatures.

12. The method according to claim 10, further comprising:
calculating a thermal load of each of the storage compartments to be cooled by use of a difference between the detected temperature and the set temperature of each of the storage compartments, the cooling priorities being assigned to the respective storage compartments from highest to lowest thermal loads.

13. The method according to claim 10, further comprising:
performing a natural defrosting operation for operating the fan of the evaporator of the last storage compartment of the cooling priorities after the last storage compartment is completely cooled.

14. The method according to claim 13, wherein the natural defrosting operation comprises operating the fan of the evaporator of the last storage compartment of the cooling priorities for a predetermined amount of time.

15. The method according to claim 13, wherein the natural defrosting operation comprises operating the fan of the evaporator of the last storage compartment of the cooling priorities until a predetermined temperature in the evaporator is obtained.
